# EUROPEAN PATENT SPECIFICATION

(11) **EP 3 875 929 B1**
(45) Date of publication and mention of the grant of the patent: **01.05.2024**
(21) Application number: 20160717.3
(22) Date of filing: 03.03.2020
(51) Int. Cl.: G01J 5/0821, H04N 5/33, G01J 1/08, G01K 11/20, G01J 5/08, G01J 1/58, G01J 1/44

(54) **METHOD AND ELECTRONIC PROCESSING UNIT FOR MEASURING AND PROCESSING OPTICAL SIGNALS FOR TEMPERATURE MEASUREMENT**
VERFAHREN UND ELEKTRONISCHE VERARBEITUNGSEINHEIT ZUR MESSUNG UND VERARBEITUNG VON OPTISCHEN SIGNALEN ZUR TEMPERATURMESSUNG
PROCÉDÉ ET UNITÉ DE TRAITEMENT ÉLECTRONIQUE DE MESURE ET DE TRAITEMENT DE SIGNAUX OPTIQUES POUR LA MESURE DE LA TEMPÉRATURE

(43) Date of publication of application: 08.09.2021
(73) Proprietor: VSB-Technical University of Ostrava, 708 00 Ostrava-Poruba (CZ)
(72) Inventor: Hercik, Radim, 73924 Krmelin (CZ); Kucera, Robert, 75501 Vsetin (CZ); Koziorek, Jiri, 708 00 Ostrava-Poruba (CZ); Prauzek, Michal, 708 00 Ostrava-Poruba (CZ)
(74) Representative: Epping - Hermann - Fischer

(56) References cited:
- WO-A1-92/10132
- CZ-U1- 33 062
- US-A- 5 112 137
- US-A- 5 255 980
- US-A1- 2019 383 732
- US-B1- 6 614 562

## Description

The invention relates to a method and an electronic processing unit for measuring and processing optical signals for temperature measurement.

Measuring high temperatures is in widespread use. This also relates to the automotive industry wherein thermocouples or resistive thermometers, whose signal is electronically processed, are used to enable measuring of high temperatures, because the output of such sensors is known handling with electrical current or voltage. However, improving accuracy and signal quality is an ongoing task. The disclosure of CZ 33062 U1 relates to a temperature measuring device with a high temperature sensor. The device comprises a microcontroller, a LED diode, an optical fiber, a ruby crystal and a communication module. The microcontroller is fed via the LED diode and the optical fiber supply connected to receive signals from the ruby crystal.

Document US 5112137 A discloses high temperature range black body techniques combined with lower temperature range photoluminescent techniques. A method comprises signal detection and processing and temperature measurements within an overlap of the two temperature ranges to calibrate measurements made in the higher range by the black body technique.

Document US 5255980 A discloses a temperature sensing system which has a signal means to provide a signal representative of a temperature responsive luminescence, where the luminescence has a characteristic time-rate-of-decay. A means for comparison is connected to the signal means and samples the signal during two time intervals, the first interval overlapping the second. The averages of the samples are compared to provide a difference signal representative of the difference between the two measured averages.

In document WO 92/10132 A1 an electronic measuring system is described based on luminescence integrated optics. For measuring temperature or some other parameter from the decay time of a luminescent sensor a high bandwidth, low noise amplifier applies a detected decaying luminescent signal to a digital system that acquires that signal and processes it in order to determine its decay time characteristics that are related to temperature or another parameter being measured.

Document US 2019/383732 A1 discloses a further electronic arrangement which includes a first bias terminal, a ground terminal, a photodiode including an anode terminal and a cathode terminal, and a transimpedance amplifier including an operational amplifier. The electronic arrangement is switchable to a photocurrent measurement mode and a temperature measurement mode.

Document US 6614562 B1 discloses a method to reduce dark current noise in an imaging system. The method comprises measuring the temperature of a silicon diode embedded on the same integrated circuit with the image sensor. This information may be used together with initial dark current calibration information, to provide dark current compensation on the fly during image capture.

One object of the invention is to improve signal quality and measuring accuracy of a temperature measurement.

The object is achieved by the features of the independent claims. Advantageous embodiments of the invention are given in the respective dependent claims.

According to a first aspect of the invention a method for measuring and processing optical signals for temperature measurement based on luminescence of an optical crystal, comprises receiving optical signals being representative for thermal radiation based on luminescence of the crystal. The method further comprises exciting the crystal due to providing energy thereto using emission of a light emitting diode and collecting gray body radiation with respect to the crystal using a photodiode depending on the excited the crystal. The method further comprises determining and compensating dark current of the photodiode, and processing the received optical signals depending on the determined and compensated dark current of the photodiode and the collected gray body radiation. The dark current is compensated by the following procedure:
a) voltage on the photodiode is measured;
b) current before « current sink « is measured (in application voltage on resistor is measured);
c) from a) and b) the value of current sink is set;
d) current compensation, which flows from voltage reference to current sink, cancels the dark current created by photodiode completely;
e) reaching the state of: current compensation = - (current - dark current);
f) current, which flows to the current meter and is proportional to the illumination of the photodiode, is dark current compensated or free of dark current

Such a configuration of a signal processing method enables improvement of signal quality and measuring accuracy of optical temperature measurement signals. In particular, the method enables beneficial processing of signals relating to high temperature sensors in the automotive industry measuring in temperature ranges of -40°C up to 1200°C. In particular, the described method can be used for processing temperature signals measured in an exhaust system or in turbo applications.

With such a set-up, the entire electronics do not require bipolar power, but only one supply voltage is sufficient. If the current from the photodiode is less than the reference current, the voltage at the output of the amplifier is less than the reference voltage. If the current of the photodiode is higher, then the voltage is higher than the reference. The output voltage from the logarithmic amplifier is further influenced by a compensation circuit that provides compensation for the temperature influence of the electronics itself and then amplified by the operational amplifier to a standard output to ensure the use of the next AD converter range.

According to an embodiment of the method the step of processing the received optical signals comprises compensation of a determined temperature of the photodiode.

It is a recognition in the context of the invention that in the automotive industry for measuring high temperatures thermocouples or resistive thermometers, whose signal is electronically processed, are used, because of the known handling of the output of such sensors which is electrical current or voltage. However, measuring high temperatures using crystal materials and the effect of luminescence or a combination of luminescence and gray body radiation enables more precise and accurate measurements.

Luminescence is the effect of changing the wavelength of emitted photons in a suitable crystal material. These wavelengths either change with temperature or change their time behaviour, while at higher temperatures the law of black (gray) body radiation can be used. For the use of luminescence or thermal radiation, two optical fibers are used, one to lead-in light into the crystal, the other to take-off the luminescence light from the crystal. The use of optical principles leads to electromagnetic interference immunity and the possibility of separating the measurement site from the point where the measured signal is processed. This optical signal needs special electronic handling, due to using LED and photodiodes. The described method enables such a specific electronic handling and contributes to an enhanced signal processing resulting in an improved signal quality by compensation of dark current of the photodiode, inter alia.

The dark current of the photodiode is generated by a parasitic leakage in the transition structure, which manifests itself as an unwanted resistance in parallel to the transition of the photodiode. As a result, the useful signal of the photodiode is reduced (by reducing of the output current). As the photodiode transition temperature rises, an exponential increase of dark current occurs. In the case of low illumination of the photocell transition, the dark current signal is lost at higher tem peratures.

The described dark current compensation is based on measuring the photodiode transition temperature by the voltage drop across the photodiode using a circuit that monitors a reference voltage and the anode and cathode voltages of the photocell having anode connected to the reference voltage. The amount of compensation can then be calibrated by the magnitude of the resistance of the calibration resistor. Its size is proportional to the internal resistance of the photodiode and its value is calculated in advance.

When the photodiode transition is illuminated, there is a current created by its PN junction and the voltage on this photodiode's PN junction is also changed. The cathode of photodiode is connected to one input of a differential logarithmic amplifier, a reference current is connected to the other input.

According to a further embodiment of the method the step of processing the received optical signals comprises providing a logarithmic amplifier and expanding the range of processible optical signals using the logarithmic amplifier. Such a configuration enables the beneficial processing of optical temperature measurement signals over a wide signal range with progressive amplification.

According to a further embodiment of the method the step of processing the received optical signals comprises providing a signal output amplifier and a low pass filter and processing the received optical signals using the signal output amplifier and the low pass filter. Such a configuration further contributes to enhanced signal quality of the processed optical temperature measurement signals.

According to a further embodiment the method comprises applying the signal output of the low pass filter to an analog-to-digital converter which is connected to a micro processing unit. The method further comprises monitoring the processing of the received optical signals by means of the micro processing unit. Such a configuration enables measuring or monitoring the progress of the performance of the optical signals.

The signal output from the low frequency filter can also fed to a comparator whose reference input is a microprocessor controlling a digital-to-analogue converter signal. In such a configuration, a comparator output is connected to the microprocessor allowing to measure a time of the optical luminescent signals.

According to a further embodiments of the method the micro processing unit is configured to switch between different processing ranges with respect to the received optical signals. For instances, the micro processing unit in configured to switch and process optical signals for temperature measurements in a first temperature range of -10°C up to 300°C and in a second temperature range of 300°C up to 1200°C.

According to a further embodiment the method comprises storing configuration and/or measurement data with respect to the processed optical signals.

The described method realizes a cheap processing solution and allows for photodiode dark current compensation and temperature compensation of photodiode. The method further contributes to processing of a wide signal range due to logarithmic amplifier, inter alia.

According to a second aspect of the invention an electronic processing unit for measuring and processing optical signals for temperature measurement is configured to perform an embodiment of the method as described above. According to an embodiment the electronic processing unit comprises a photodiode which is configured to measure optical signals based on luminescence of a crystal and a light emitting diode which is configured to excite energy to the crystal. The electronic processing unit further comprises a micro processing unit which is configured to control the light emitting diode and to process optical signals being representative for thermal radiation based on luminescence of the crystal and signals received by the photodiode.

Because the electronic processing unit is configured to perform an embodiment of the method as described above all described characteristics and features corresponding to embodiments of the method also relate to the electronic processing unit and vice versa.

Exemplary embodiments of the invention are explained in the following with the aid of schematic drawings and reference numbers. Identical reference numbers designate elements or components with identical functions. The Figures show:
Figure 1 an exemplary embodiment of an electronic processing unit for measuring and processing optical signals for temperature measurement;
Figure 2 a further exemplary embodiment of an electronic processing unit for measuring and processing optical signals for temperature measurement;
Figure 3 an exemplary embodiment of dark current compensation.

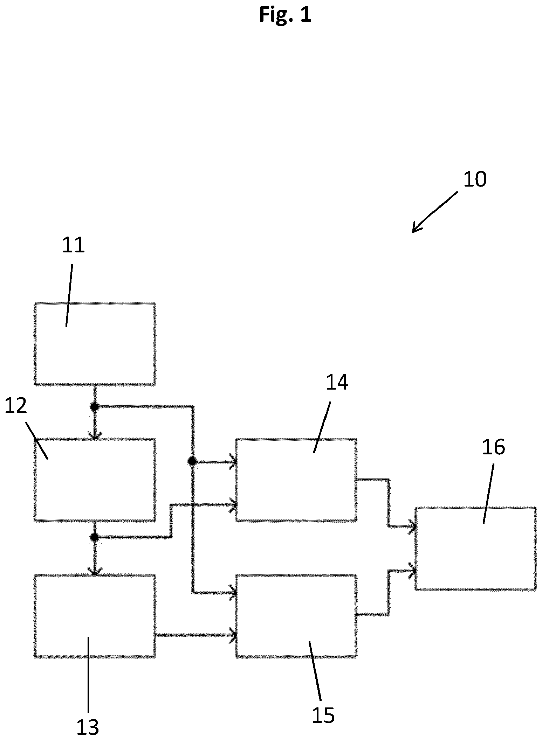

Figure 1 illustrates an exemplary embodiment of an electronic processing unit 10 for measuring and processing optical signals for temperature measurement. The electronic processing unit 10 is configured to perform a method for measuring and processing optical signals for temperature measurement. The optical signals are based on an optical temperature measurement and the effect of luminescence using optical fibers and a crystal emitting the luminescence.

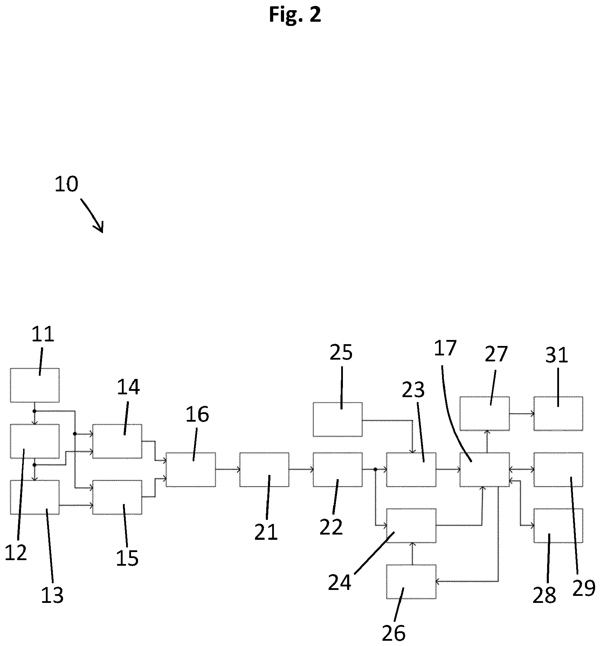

Figure 1 illustrates a possible structure of the electronic processing unit 10 comprising a current source 11 connected with a current monitor 12 which itself is connected to a photodiode 13. The electronic processing unit 10 further comprises a dark current compensation module 14 and a differential logarithmic amplifier 15. Furthermore, the electronic processing unit 10 comprises a temperature compensation module 16. The illustrated lines, arrows and connection points indicate the configured signal transfers between the described elements. For instances, the dark current compensation module 14 is configured to receive signals from the current source 11 and signals from the current monitor 12. The differential logarithmic amplifier 15 is configured to receive signals from the current source 11 and the photodiode 13. The described elements of the electronic processing unit 10 can be controlled using a micro processing unit 17 (s. Fig. 2).

Figure 2 illustrates a further exemplary embodiment of the electronic processing unit 10. Therein, the illustrated lines, arrows and connection points again indicate the configured signal transfers between the shown elements.

The electronic device or electronic processing unit 10 served to measure and process optical signals for temperature measurement. The process is based on the control and measurement of optical signals by a light emitting diode (LED) and a photodiode, using optical principles of crystal luminescence and gray body radiation. The electronic processing unit 10 includes a LED 31 which is controlled by the microprocessor 17 through a current source or power source 27 and served to excite the energy into the luminescence crystal. The photodiode 13 is used to collect gray body optical signals and crystal luminescence.

The electronic processing unit 10 enables performing a beneficial optical signal processing method by control, measurement and processing of optical signals on the principle of gray body radiation and luminescence. The electronic processing unit 10 contains a system of compensation of dark current of photodiode transition and thermal stabilization of photodiode while maintaining high sensitivity and dynamics of measurement.

The electronic processing unit 10 includes the dark current compensation module 14 realizing a mechanism that provides compensation for the dark current of the photodiode 13.

The electronic processing unit 10 further includes the temperature compensation module 16 realizing a mechanism for temperature compensation of the photodiode 13.

The electronic processing unit 10 further comprises the differential logarithmic amplifier 15 that allows to measure a wide range of optical signals. The electronic processing unit 10 realizes an optical signal measurement system and further includes an output amplifier block 21 and a low-frequency filter 22.

The signal output from the low frequency filter 22 is applied to an analogue-to-digital converter 23 which is further coupled to the microprocessor 17. This connection is intended for measuring the progress of the performance of optical signals, inter alia.

The signal from the low frequency filter 22 is also fed to a comparator 24 whose reference input is a microprocessor controlled digital-to-analogue converter signal of a digital-to-analogue converter 26. The signal output of the comparator 24 is connected to the microprocessor 17. The primary purpose of this connection is to measure the time of the optical luminescent signals.

The electronic processing unit 10 is also equipped with an NTC temperature measurement module 25 that is connected to the microprocessor 17 via the analogue-to-digital converter 23.

The electronic processing unit 10 also includes a configuration memory module 28 for storing configuration and measurement data as well as a communication module or communication interface 29 that is directly connected to the microprocessor 17.

The described the electronic processing unit 10 realizes a cheap solution and allows for photodiode dark current compensation and temperature compensation of the photodiode 13. The electronic processing unit 10 and the corresponding signal processing method further contributes to beneficial processing of a wide signal range due to the logarithmic amplifier 15, inter alia. The electronic processing unit 10 and the signal processing method are useful for enabling precise and reliable high temperature measurements in the automotive industry, in particular. However, the electronic processing unit 10 and the signal processing method are useful in further optical signal processing applications as well and contribute to high signal quality and accuracy.

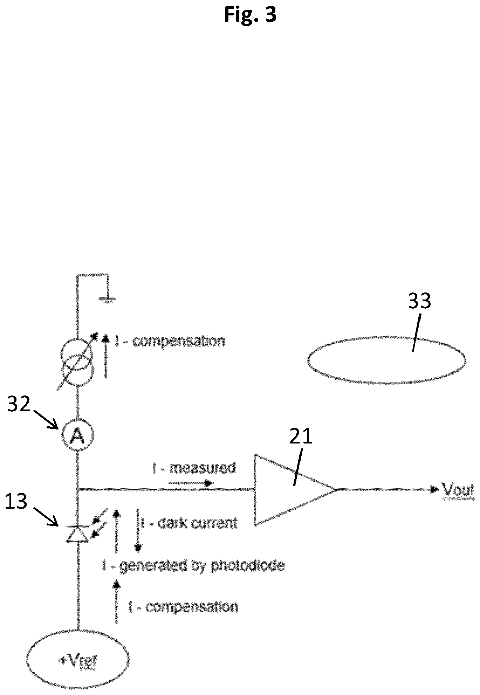

Figure 3 illustrates dark current compensation according to the invention with respect to
the photodiode 13. The dark current of the photodiode 13 is generated by a parasitic leakage in the transition structure, which manifests itself as an unwanted resistance in parallel to the transition of the photodiode 13. As a result, the useful signal of the photodiode 13 is reduced (by reducing of the output current). As the photodiode transition temperature rises, an exponential increase of dark current occurs. In the case of low illumination of the photocell transition, the dark current signal is lost at higher temperatures.

The described dark current compensation is based on measuring the photodiode transition temperature by the voltage drop across the photodiode 13 using a circuit that monitors a reference voltage and the anode and cathode voltages of the photocell having anode connected to a reference voltage Vref. The amount of compensation can then be calibrated by the magnitude of the resistance of the calibration resistor. Its size is proportional to the internal resistance of the photodiode and its value is calculated in advance.

When the photodiode transition is illuminated, there is a current created by its PN junction and the voltage on this photodiode's PN junction is also changed. The cathode of photodiode 13 is connected to one input of the differential logarithmic amplifier 21, a reference current is connected to the other input.

The dark current compensation according to the invention is performed by the following procedure:
a) voltage on the photodiode 13 is measured;
b) current before « current sink « is measured (in application voltage on resistor is measured);
c) from a) and b) the value of current sink is set;
d) current compensation, which flows from voltage reference to current sink, cancels the dark current created by photodiode completely;
e) reaching the state of: current compensation = - (current - dark current);
f) current, which flows to a current meter 32 and is proportional to the illumination of the photodiode 13, is dark current compensated or free of dark current

With such a set-up, the entire electronics do not require bipolar power, but only one supply voltage is sufficient. If the current from the photodiode is less than the reference current, a voltage Vout at the output of the amplifier 21 is less than the reference voltage Vref. If the current of the photodiode is higher, then the voltage is higher than the reference voltage Vref. The output voltage Vout from the logarithmic amplifier is further influenced by a compensation circuit that provides compensation for the temperature influence of the electronics itself and then amplified by the operational amplifier to a standard output to ensure the use of the next AD converter range.

Voltage on the photodiode 13 is measured which is proportional to the temperature of the photodiode 13 according to the measured value. Further, compensation current is set. The voltage meter 32 enables feedback to current sink by analog means or digital means. The ampere meter 32 enables current measurement usually based on measuring a voltage on a calibration resistor. The measured current or I - measured according to figure 3 reaches the logarithmic current-to-voltage amplifier 21. Preferably, an independent temperature sensor 32 is used to compensate characteristics of the analog-digital-converters, the current sink etc.

## Claims

1. Method for measuring and processing optical signals for temperature measurement based on luminescence of an optical crystal, comprising:
- receiving optical signals being representative for thermal radiation based on luminescence of the crystal,
- exciting the crystal due to providing energy thereto using emission of a light emitting diode (31),
- collecting gray body radiation with respect to the crystal using a photodiode (13) depending on the excited the crystal,
- determining dark current of the photodiode (13), comprising:
- measuring a voltage on the photodiode (13),
- measuring a current before current sink based on measuring a voltage on a calibration resistor having a resistance proportional to the internal resistance of the photodiode (13),
- setting a value of current sink based on the measured voltage on the photodiode (13) and the measured current before current sink, and
- processing the received optical signals depending on the determined dark current of the photodiode (13) and the collected gray body radiation including compensating the determined dark current created by the photodiode (13) based on the set value of current sink depending on the current, which flows from a voltage reference to current sink.

2. Method in accordance with claim 1, wherein the step of processing the received optical signals comprises:
- determining a temperature of the photodiode (13), and
- compensating the temperature of the photodiode (13).

3. Method in accordance with claim 1 or 2, wherein the step of processing the received optical signals comprises:
providing a logarithmic amplifier (21) and expanding the range of processible optical signals using the logarithmic amplifier (21).

4. Method in accordance with one of the claims 1 to 3, wherein the step of processing the received optical signals comprises:
providing a signal output amplifier (21) and a low pass filter (22) and processing the received optical signals using the signal output amplifier (21) and the low pass filter (22).

5. Method in accordance with claim 4, comprising:
- applying the signal output of the low pass filter (22) to an analog-to-digital converter (23) connected to a micro processing unit (17), and
- monitoring the processing of the received optical signals by means of the micro processing unit (17).

6. Method in accordance with claim 5, wherein the micro processing unit (17) is configured to switch between different processing ranges with respect to the received optical signals comprising a first temperature range of -10°C up to 300°C and a second temperature range of 300°C up to 1200°C.

7. Method in accordance with one of the claims 1 to 6, comprising:
storing configuration and/or measurement data with respect to the processed optical signals.

8. Electronic processing unit (10) for measuring and processing optical signals for temperature measurement, which is configured to perform a method according to one of the claims 1 to 7, comprising:
- a photodiode (13) configured to measure optical signals based on luminescence of a crystal,
- a light emitting diode (31) configured to excite energy to the crystal, and
- a micro processing unit (17) configured to control the light emitting diode (31) and to process optical signals being representative for thermal radiation based on luminescence of the crystal and signals received by the photodiode (13).

## Patentansprüche

1. Verfahren zum Messen und Verarbeiten von optischen Signalen zur Temperaturmessung beruhend auf der Lumineszenz eines optischen Kristalls, umfassend:
- Empfangen von optischen Signalen, die eine Wärmestrahlung beruhend auf der Lumineszenz des Kristalls darstellen,
- Anregen des Kristalls, indem man ihm unter Verwendung der Emission einer Leuchtdiode (31) Energie bereitstellt,
- Sammeln von Graukörperstrahlung in Bezug auf den Kristall unter Verwendung einer Fotodiode (13) abhängig von der Anregung des Kristalls,
- Bestimmen eines Dunkelstroms der Fotodiode (13), umfassend:
- Messen einer Spannung an der Fotodiode (13),
- Messen eines Stroms vor einer Stromsenke beruhend auf einer Messung einer Spannung an einem Kalibrierwiderstand mit einem Widerstandswert proportional zum inneren Widerstandswert der Fotodiode (13),
- Einstellen eines Wertes der Stromsenke beruhend auf der gemessenen Spannung an der Fotodiode (13) und dem gemessenen Strom vor der Stromsenke, und
- Verarbeiten der empfangenen optischen Signale abhängig von dem bestimmten Dunkelstrom der Fotodiode (13) und der gesammelten Graukörperstrahlung, umfassend ein Kompensieren des bestimmten, von der Fotodiode (13) beruhend auf dem eingestellten Wert der Stromsenke abhängig von dem Strom erzeugten Dunkelstroms, der von einer Spannungsreferenz zur Stromsenke fließt.

2. Verfahren nach Anspruch 1, wobei der Schritt des Verarbeitens der empfangenen optischen Signale umfasst:
- Bestimmen einer Temperatur der Fotodiode (13), und
- Kompensieren der Temperatur der Fotodiode (13).

3. Verfahren nach Anspruch 1 oder 2, wobei der Schritt des Verarbeitens der empfangenen optischen Signale umfasst:
Bereitstellen eines logarithmischen Verstärkers (21) und Erweitern des Bereichs der verarbeitbaren optischen Signale unter Verwendung des logarithmischen Verstärkers (21).

4. Verfahren nach einem der Ansprüche 1 bis 3, wobei der Schritt des Verarbeitens der empfangenen optischen Signale umfasst:
Bereitstellen eines Signalausgangsverstärkers (21) und eines Tiefpassfilters (22) und Verarbeiten der empfangenen optischen Signale unter Verwendung des Signalausgangsverstärkers (21) und des Tiefpassfilters (22).

5. Verfahren nach Anspruch 4, umfassend:
- Anlegen des Signalausgangs des Tiefpassfilters (22) an einen Analog/Digital-Wandler (23), der mit einer Mikro-Verarbeitungseinheit (17) verbunden ist, und
- Überwachen der Verarbeitung der empfangenen optischen Signale mittels der Mikro-Verarbeitungseinheit (17).

6. Verfahren nach Anspruch 5, wobei die Mikro-Verarbeitungseinheit (17) dafür ausgelegt ist, zwischen verschiedenen Verarbeitungsbereichen in Bezug auf die empfangenen optischen Signale umzuschalten, umfassend einen ersten Temperaturbereich von -10°C bis zu 300°C und einen zweiten Temperaturbereich von 300°C bis zu 1200°C.

7. Verfahren nach einem der Ansprüche 1 bis 6, umfassend: Speichern von Konfigurations- und/oder Messdaten in Bezug auf die verarbeiteten optischen Signale.

8. Elektronische Verarbeitungseinheit (10) zum Messen und Verarbeiten von optischen Signalen zur Temperaturmessung, die dafür ausgelegt ist, ein Verfahren nach einem der Ansprüche 1 bis 7 durchzuführen, aufweisend:
- eine Fotodiode (13), die dafür ausgelegt ist, optische Signalen beruhend auf der Lumineszenz eines Kristalls zu messen,
- eine Leuchtdiode (31), die dafür ausgelegt ist, Energie an den Kristall anzuregen, und
- eine Mikro-Verarbeitungseinheit (17), die dafür ausgelegt ist, die Leuchtdiode (31) zu steuern und optische Signale, die eine Wärmestrahlung beruhend auf der Lumineszenz des Kristalls darstellen, sowie Signale, die von der Fotodiode (13) empfangen werden, zu verarbeiten.

## Revendications

1. Procédé de mesure et de traitement de signaux optiques pour la mesure de température sur la base de la luminescence d'un cristal optique, comprenant :
- la réception des signaux optiques représentant un rayonnement thermique basé sur la luminescence du cristal,
- l'excitation du cristal en lui fournissant de l'énergie en utilisant l'émission d'une diode électroluminescente (31),
- le fait de recueillir un rayonnement de corps gris par rapport au cristal en utilisant une photodiode (13) en fonction de l'excitation du cristal,
- le fait de déterminer un courant d'obscurité de la photodiode (13), comprenant :
- la mesure d'une tension aux bornes de la photodiode (13),
- la mesure d'un courant avant un puits de courant sur la base d'une mesure d'une tension aux bornes d'une résistance d'étalonnage ayant une valeur de résistance proportionnelle à la valeur de résistance interne de la photodiode (13),
- l'ajustement d'une valeur du puits de courant sur la base de la tension mesurée aux bornes de la photodiode (13) et du courant mesuré en amont du puits de courant, et
- le traitement des signaux optiques reçus en fonction du courant d'obscurité déterminé de la photodiode (13) et du rayonnement de corps gris collecté, comprenant la compensation du courant d'obscurité déterminé généré par la photodiode (13) sur la base de la valeur réglée du puits de courant en fonction du courant qui circule depuis une référence de tension vers le puits de courant.

2. Le procédé selon la revendication 1, sachant que l'étape de traitement des signaux optiques reçus comprend :
- le fait de déterminer une température de la photodiode (13), et
- la compensation la température de la photodiode (13).

3. Le procédé selon la revendication 1 ou 2, sachant que l'étape de traitement des signaux optiques reçus comprend :
la fourniture d'un amplificateur logarithmique (21) et étendre la gamme des signaux optiques pouvant être traités en utilisant l'amplificateur logarithmique (21).

4. Le procédé selon l'une quelconque des revendications 1 à 3, sachant que l'étape de traitement des signaux optiques reçus comprend :
la fourniture d'un amplificateur de sortie de signal (21) et un filtre passe-bas (22), et traiter les signaux optiques reçus en utilisant l'amplificateur de sortie de signal (21) et le filtre passe-bas (22).

5. Le procédé selon la revendication 4, comprenant :
- l'application de la sortie de signal du filtre passe-bas (22) à un convertisseur analogique-numérique (23) connecté à une micro-unité de traitement (17), et
- la surveillance du traitement des signaux optiques reçus au moyen de la micro-unité de traitement (17).

6. Le procédé selon la revendication 5, sachant que la micro-unité de traitement (17) est adaptée pour commuter entre différentes plages de traitement par rapport aux signaux optiques reçus, comprenant une première plage de température allant de -10°C à 300°C et une deuxième plage de température allant de 300°C à 1200°C.

7. Le procédé selon l'une quelconque des revendications 1 à 6, comprenant :
la mémorisation de données de configuration et/ou de mesure relatives aux signaux optiques traités.

8. Unité électronique de traitement (10) pour la mesure et le traitement de signaux optiques pour la mesure de température, adaptée pour mettre en œuvre un procédé selon l'une quelconque des revendications 1 à 7, comprenant :
- une photodiode (13) adaptée pour la mesure des signaux optiques sur la base de la luminescence d'un cristal,
- une diode électroluminescente (31) adaptée pour l'excitation d'énergie vers le cristal, et
- une micro-unité de traitement (17) adaptée pour commander la diode électroluminescente (31) et pour traiter des signaux optiques représentant un rayonnement thermique basé sur la luminescence du cristal et des signaux reçus de la photodiode (13) .
